# EUROPÄISCHE PATENTSCHRIFT

(11) **EP 2 569 571 B1**
(45) Veröffentlichungstag und Bekanntmachung des Hinweises auf die Patenterteilung: **19.07.2017**
(21) Anmeldenummer: 11717969.7
(22) Anmeldetag: 05.05.2011
(51) Int. Cl.: F17D 1/04, F16L 7/00

(54) **WASSERSTOFFINFRASTRUKTUR**
HYDROGEN INFRASTRUCTURE
INFRASTRUCTURE POUR HYDROGÈNE

(30) Priorität: 12.05.2010 DE 102010020280
(43) Veröffentlichungstag der Anmeldung: 20.03.2013
(73) Patentinhaber: Linde Aktiengesellschaft, 80331 München (DE)
(72) Erfinder: ADLER, Robert, A-2201 Gerasdorf (AT); SIEBERT, Georg, A-1070 Wien (AT); MAYER, Markus, A-2331 Vösendorf (AT)
(74) Vertreter: Zahn, Christoph
(86) Internationale Anmeldenummer: PCT/EP2011/002243
(87) Internationale Veröffentlichungsnummer: WO 2011/141141

(56) Entgegenhaltungen:
- DE-A1-102008 057 694
- US-A1- 2009 313 896

## Beschreibung

Die Erfindung betrifft ein Verfahren zum Transportieren und Verteilen von gasförmigem Wasserstoff.

Wasserstoff wird gegenwärtig überwiegend dezentral in vergleichsweise großen Produktionseinheiten produziert, verflüssigt oder verdichtet und mittels entsprechender Transportfahrzeuge (Trailer) zum Ort der beabsichtigten Verwendung, beispielsweise einer Wasserstofftankstelle, transportiert. Des Weiteren fällt Wasserstoff bei einer Vielzahl von chemischen Prozessen in großen Mengen als Beiprodukt an. Angedacht wird ferner, Wasserstoff dezentral in kleineren Produktionseinheiten, wie beispielsweise mittels Elektrolyse oder Steam-Reforming, zu produzieren und auf diese Weise den Transportweg zu verkürzen oder gänzlich zu eliminieren.

Der Nachteil der vorbeschriebenen Produktionsmethoden ist, dass sie vergleichsweise hohe Investitionskosten erfordern und insbesondere der Wirkungsgrad im Falle der dezentralen Erzeugung vergleichsweise schlecht ist.

Angedacht werden ferner Wasserstoff-Pipeline-Netze, in denen der Wasserstoff auf unterschiedlichen Druckniveaus transportiert wird. Derartige Pipeline-Netze sind jedoch ebenfalls sehr investitionskostenintensiv und erfordern darüber hinaus aufwändige Genehmigungsverfahren, weswegen eine Realisierung in der nahen Zukunft eher unwahrscheinlich erscheint. Aus dem Dokument US2009/0313896 ist es bereits bekannt Wasserstoff in ehemalige Erdgas-Netze anstelle des Erdgases durchzuleiten. Aufgabe der vorliegenden Erfindung ist es, ein gattungsgemäßes Verfahren zum Transportieren und Verteilen von gasförmigem Wasserstoff anzugeben, das die vorgenannten Nachteile vermeidet.

Zur Lösung dieser Aufgabe wird ein Verfahren zum Transportieren und Verteilen von gasförmigem Wasserstoff vorgeschlagen, das dadurch gekennzeichnet ist, dass der gasförmige Wasserstoff in einem Rohrleitungsnetz (Wasserstoff-Rohrleitungsnetz), das zumindest teilweise in ein bestehendes Rohrleitungsnetz (Supportnetz), vorzugsweise in ein Erdgas-Rohrleitungsnetz integriert ist, transportiert wird.

Weitere vorteilhafte Ausgestaltungen des erfindungsgemäßen Verfahrens zum Transportieren und Verteilen von gasförmigem Wasserstoff sind dadurch gekennzeichnet, dass
- der gasförmige Wasserstoff im Gleich- und/oder Gegenstrom zu dem im Supportnetz strömenden Medium transportiert wird,
- der Wasserstoff nach seiner Entnahme aus dem Wasserstoff-Rohrleitungsnetz auf einen Druck bis zu 900 bar verdichtet oder auf einen Druck, der unterhalb des Drucks, mit dem der Wasserstoff im Wasserstoff-Rohrleitungsnetz transportiert wird, entspannt wird,
- wobei die Verdichtung des Wasserstoffs vorzugsweise mittels wenigstens eines Booster-Kompressors erfolgt,
- der Transport bzw. die Verteilung des Wasserstoffs nach der Entnahme aus dem Wasserstoff-Rohrleitungsnetz mittels Druckgasspeicher erfolgt,
- wobei der Transport bzw. die Verteilung des Wasserstoffs mittels Druckgasspeicher bei einem Druck zwischen 120 und 900 bar, vorzugsweise zwischen 200 und 300 bar erfolgt, und
- der Wasserstoff unter einem dem Supportnetz äquivalenten Druck - dies führt zu niedrigen Kosten für die Netzinliner - oder unter einem von dem Supportnetz abweichenden Druck, vorzugsweise Überdruck, - hieraus resultieren entsprechende Mehrkosten für druckstabile Netzinliner - transportiert wird,

Erfindungsgemäß wird der gasförmige Wasserstoff nunmehr in einem Rohrleitungsnetz - nachfolgend als Wasserstoff-Rohrleitungsnetz bezeichnet - transportiert. Hierbei ist das Wasserstoff-Rohrleitungsnetz erfindungsgemäß in einem bestehenden Rohrleitungsnetz - nachfolgend als Supportnetz bezeichnet -, vorzugsweise einem Erdgas-Rohrleitungsnetz, integriert.

Unter dem Begriff "Rohrleitungsnetz" sein alle Netzwerke zu verstehen, die dem Transport sowie der Verteilung von gasförmigen und/oder flüssigen Medien dienen, wobei insbesondere bei gasförmigen Medien Druckrohre zur Anwendung kommen.

Unter dem Begriff "bestehendes Rohrleitungsnetz" seien auch Rohrleitungsnetze zu verstehen, die zukünftig realisiert werden.

Der Transport mittels eines in einem bestehenden Rohrleitungs- bzw. Supportnetz integrierten Wasserstoff-Rohrleitungsnetzes stellt die energetisch und wirtschaftlich sinnvollste Lösung dar, um gasförmigen Wasserstoff über große Distanzen zu transportieren und an Kunden zu verteilen. Das bestehende Supportnetz wird hierbei vorzugsweise im Zuge von Inspektionen oder Wartungen durch Einbringen des Wasserstoff-Rohrleitungsnetzes aufgerüstet.

Wie bereits erwähnt, erfolgt die Produktion von Wasserstoff bisher überwiegend an großen Industriestandorten oder als Beiprodukt von chemischen Prozessen. Da diese in vielen Fällen mit einem Erdgas- und/oder Rohrleitungsnetz verbunden sind - das darin transportierte Erdgas dient hierbei als Energieträger und/oder Einsatzstoff -, kann der erzeugte Wasserstoff über das bzw. die bestehende Rohrleitungsnetze abtransportiert werden.

In der Praxis ist hierzu ein separates Rohr, vorzugsweise ein diffusionsarmes Kunststoffrohr, in die bestehende(n) Rohrleitung(en) des Supportnetzes einzuziehen, über das der Wasserstoff - entweder im Gegen- oder im Gleichstrom zu dem im Supportnetz strömenden Medium - transportiert wird. Unvermeidbare Leckagen oder die Diffusion von Wasserstoff in das Medium sind insbesondere im Falle von Erdgas unkritisch, da sie lediglich zur Anreicherung des Erdgases mit Wasserstoff führen.

Das verwendete Rohr muss für den ggf. herrschenden Druckunterschied geeignet sein. Vorzugsweise sollte das Wasserstoff-Rohrleitungssystem gesichert unter einem höheren Druck stehen, als das genutzte Supportsystem. Sollte diese Anforderung nicht erfüllbar sein, müssen die verwendeten Rohre zusätzlich Druckkräfte von außen standhalten.

Spezielle Rohrleitungssysteme sind bei denjenigen Supportnetzen zu integrieren, die nicht brennbare und/oder auf Wasserstoff basierende Medien transportieren. In diesen Fällen werden höhere Ansprüche an die Dichtheit der für den Wasserstoff-Transport verwendeten Leitungen gestellt.

Das bestehende Supportnetz bzw. die dieses Rohrleitungsnetz bildenden Rohre dienen somit als Hüllrohre für die Rohre des Wasserstoff-Rohrleitungsnetzes. Der Aufbau des erfindungsgemäßen Wasserstoff-Rohrleitungsnetzes würde sich deshalb vergleichsweise einfach gestalten, da keine neuen Grabungen erforderlich sind; das Einziehen eines Rohres in ein existierendes Rohr ist Stand der Technik und kann auch im Falle vergrabener Rohre ohne aufwendige Grabungsarbeiten erfolgen.

Der Druck, mit dem der Wasserstoff innerhalb des Wasserstoff-Rohrleitungsnetzes transportiert wird, entspricht oder übersteigt dem Druck, mit dem das Medium innerhalb des Supportnetzes geführt wird. Mittels dieser Verfahrensweise können die mechanischen Belastungen auf die Wasserstoff-Führenden Rohre minimiert werden.

Weist Wasserstoff den gleichen Druck wie Erdgas auf, kann der Wasserstoff mit 5- bis 10facher Fließgeschwindigkeit transportiert werden. Dies hat zur Folge, dass die für das Wasserstoff-Rohrleitungsnetz vorzusehenden Rohre keine wesentliche Durchflussbeeinträchtigung des Erdgas-Rohrleitungsnetzes darstellen. Lediglich 10 bis 20 % der freien Querschnittsfläche eines Erdgas-Rohres sind erforderlich, um die Erdgas-äquivalente Wasserstoffmenge zu transportieren.

Mittels des Wasserstoff-Rohrleitungsnetzes wird der gasförmige Wasserstoff nunmehr vom Produktionsort entweder direkt bis zum Wasserstoff-Verbraucher geführt oder zu sogenannten Verteilerstationen. In diesen wird der Wasserstoff aus dem Wasserstoff-Rohrleitungsnetz entnommen und auf den benötigten Kundenversorgungsdruck verdichtet oder entspannt. Diese Verdichtung erfolgt vorzugsweise mittels eines sogenannten Booster-Kompressors; im Falle einer Entspannung des Wasserstoffs kommen bekannte Druckentspannungssystems zur Anwendung.

Mittels des vorgenannten Booster-Kompressors erfolgt eine Verdichtung des Wasserstoffs auf jeden benötigten Wasserstoffversorgungsdruck, der durch den Kunden definiert wird. Dieser Druck liegt bei Wasserstofftankstellen zwischen 300 und 900 bar, vorzugsweise zwischen 350 und 700 bar und im Falle einer Distribution des Wasserstoffs durch andere Druckbehälter zwischen 120 und 900 bar, vorzugsweise zwischen 200 und 300 bar. Der verdichtete Wasserstoff kann anschließend mittels entsprechender Hochdruck-Trailer zu den Verbrauchern bzw. Endkunden transportiert werden. Diese Verfahrensweise ist insbesondere bei einer schlechten Erschließung des zu beliefernden Gebiets durch das Supportnetz oder der fehlenden Möglichkeit der Aufstellung von Boosterverdichtern, bspw. im innerstädtischen Bereich, sinnvoll.

Die vorerwähnte Druckanhebung mittels Booster-Kompressoren von etwa 60 auf 900 bar ist äußerst energieeffizient. Derartige Booster-Kompressoren weisen nur den halben spezifischen Strombedarf von Abfüllverdichtern auf, die mit einem Speisedruck von 3 bis 5 bar versorgt werden. Die Baugröße von Booster-Kompressoren beträgt bei gleichen Fördermengen lediglich ca. 1/10 eines vergleichbaren Abfüll-Verdichters. Es lassen sich somit am Rande von Ballungszentren vergleichsweise kostengünstige Verteilerstationen realisieren.

Während Wasserstoff-Trailer den verdichteten Wasserstoff bisher mit einem Druck zwischen 200 und 300 bar transportieren, führt eine Druckanhebung auf bis 1000 barderartige Drücke sind bei der Verwendung moderner Composite-Flaschen möglich - zu einer Vervierfachung des Transportvolumens eines Wasserstoff-Trailers.

Sofern beim Kunden bzw. Endabnehmer eine Zwischenspeicherung des Wasserstoffs realisiert werden soll, eignen sich hierfür insbesondere sogenannte Mitteldruckspeicher, in denen der gasförmige Wasserstoff vorzugsweise bei einem Druck zwischen 160 und 200 bar gespeichert wird.

Das erfindungsgemäße Verfahren zum Transportieren und Verteilen von gasförmigem Wasserstoff schafft eine vergleichsweise kostengünstige und effiziente Methode, gasförmigen Wasserstoff über längere Strecken verlustfrei zu transportieren. Die eingangs beschriebenen Nachteile des Standes der Technik werden mit dem erfindungsgemäßen Verfahren zur Gänze vermieden.

## Patentansprüche

1. Verfahren zum Transportieren und Verteilen von gasförmigem Wasserstoff, **dadurch gekennzeichnet, dass** der gasförmige Wasserstoff in einem Rohrleitungsnetz (Wasserstoff-Rohrleitungsnetz), das zumindest teilweise in ein bestehendes Rohrleitungsnetz (Supportnetz), vorzugsweise in ein Erdgas-Rohrleitungsnetz integriert ist, transportiert wird.

2. Verfahren nach Anspruch 1, **dadurch gekennzeichnet, dass** der gasförmige Wasserstoff im Gleich- und/oder Gegenstrom zu dem im Supportnetz strömenden Medium transportiert wird.

3. Verfahren nach Anspruch 1 oder 2, **dadurch gekennzeichnet, dass** der Wasserstoff nach seiner Entnahme aus dem Wasserstoff-Rohrleitungsnetz auf einen Druck bis zu 900 bar verdichtet oder auf einen Druck, der unterhalb des Drucks, mit dem der Wasserstoff im Wasserstoff-Rohrleitungsnetz transportiert wird, entspannt wird.

4. Verfahren nach Anspruch 3, **dadurch gekennzeichnet, dass** die Verdichtung des Wasserstoffs mittels wenigstens eines Booster-Kompressors erfolgt.

5. Verfahren nach einem der vorhergehenden Ansprüche 1 bis 4, **dadurch gekennzeichnet, dass** der Transport bzw. die Verteilung des Wasserstoffs nach der Entnahme aus dem Wasserstoff-Rohrleitungsnetz mittels Druckgasspeicher erfolgt.

6. Verfahren nach Anspruch 5, **dadurch gekennzeichnet, dass** der Transport bzw. die Verteilung des Wasserstoffs mittels Druckgasspeicher bei einem Druck zwischen 120 und 900 bar, vorzugsweise zwischen 200 und 300 bar erfolgt.

7. Verfahren nach einem der vorhergehenden Ansprüche 1 bis 6, **dadurch gekennzeichnet, dass** der Wasserstoff unter einem dem Supportnetz äquivalenten Druck oder unter einem von dem Supportnetz abweichenden Druck, vorzugsweise Überdruck, transportiert wird.

## Claims

1. Method for transporting and distributing gaseous hydrogen, **characterized in that** the gaseous hydrogen is transported in a pipeline network (hydrogen pipeline network), which is at least partially integrated in an existing pipeline network (support network), preferably in a natural gas pipeline network.

2. Method according to Claim 1, **characterized in that** the gaseous hydrogen is transported with the flow and/or against the flow of the medium flowing in the support network.

3. Method according to Claim 1 or 2, **characterized in that**, after its removal from the hydrogen pipeline network, the hydrogen is compressed to a pressure of up to 900 bar or is decompressed to a pressure that is below the pressure at which the hydrogen is transported in the pipeline network.

4. Method according to Claim 3, **characterized in that** the compression of the hydrogen is performed by means of at least one booster compressor.

5. Method according to one of the preceding Claims 1 to 4, **characterized in that** the transport or distribution of the hydrogen after removal from the hydrogen pipeline network is performed by means of a gas storage vessel.

6. Method according to Claim 5, **characterized in that** the transport or distribution of the hydrogen is performed by means of a compressed gas storage vessel at a pressure of between 120 and 900 bar, preferably between 200 and 300 bar.

7. Method according to one of the preceding Claims 1 to 6, **characterized in that** the hydrogen is transported at a pressure that is equivalent to that of the support network or at a pressure that is different from the support network, preferably positive pressure.

## Revendications

1. Procédé pour transporter et distribuer de l'hydrogène gazeux, **caractérisé en ce que** l'hydrogène gazeux est transporté dans un réseau de conduites tubulaires (réseau de conduites tubulaires d'hydrogène) qui est intégré au moins en partie dans un réseau de conduites tubulaires existant (réseau de support), de préférence dans un réseau de conduites tubulaires de gaz naturel.

2. Procédé selon la revendication 1, **caractérisé en ce que** l'hydrogène gazeux est transporté en co-courant et/ou à contre-courant par rapport au fluide s'écoulant dans le réseau de support.

3. Procédé selon la revendication 1 ou 2, **caractérisé en ce que** l'hydrogène, après avoir été prélevé du réseau de conduites tubulaires d'hydrogène, est comprimé à une pression allant jusqu'à 900 bars ou à une pression qui est détendue en dessous de la pression avec laquelle l'hydrogène est transporté dans le réseau de conduites tubulaires d'hydrogène.

4. Procédé selon la revendication 3, **caractérisé en ce que** la compression de l'hydrogène s'effectue au moyen d'au moins un pré-compresseur.

5. Procédé selon l'une quelconque des revendications précédentes 1 à 4, **caractérisé en ce que** le transport ou la distribution de l'hydrogène s'effectue après le prélèvement à partir du réseau de conduites tubulaires d'hydrogène au moyen d'un accumulateur de gaz sous pression.

6. Procédé selon la revendication 5, **caractérisé en ce que** le transport et/ou la distribution de l'hydrogène s'effectue au moyen d'un accumulateur de gaz sous pression à une pression comprise entre 120 et 900 bars, de préférence entre 200 et 300 bars.

7. Procédé selon l'une quelconque des revendications précédentes 1 à 6, **caractérisé en ce que** l'hydrogène est transporté à une pression équivalente à celle du réseau de support ou à une pression s'écartant de celle du réseau de support, de préférence une surpression.
